# EUROPEAN PATENT SPECIFICATION

(11) **EP 0 427 234 B1**
(45) Date of publication and mention of the grant of the patent: **01.02.1995**
(21) Application number: 90121308.2
(22) Date of filing: 07.11.1990
(51) Int. Cl.: B29C 55/12

(54) **Auto-threading method and apparatus**
Verfahren und Vorrichtung zum automatischen Einziehen eines Films
Procédé et appareil pour enfiler automatiquement une pellicule

(30) Priority: 10.11.1989 JP 293118/89; 21.09.1990 JP 252242/90
(43) Date of publication of application: 15.05.1991
(73) Proprietor: MITSUBISHI JUKOGYO KABUSHIKI KAISHA, Tokyo (JP)
(72) Inventor: Kusafuka, Noboru, Nagoya Mach. Works Mitsubishi, Nakamura-ku Nagoya-shi Aichi-ken (JP); Yoshida, Akira, Nagoya Mach. Works Mitsubishi, Nakamura-ku Nagoya-shi Aichi-ken (JP); Tsuyuki, Susumu, Nagoya Mach. Works Mitsubishi, Nakamura-ku, Nagoya-shi, Aichi-ken (JP); Seko, Tatsushi Nagoya Mach. Works Mitsubishi, Nakamura-ku, Nagoya-shi, Aichi-ken (JP); Tsutsui, Yoshimitsu Nagoya Mach. Works Mitsubishi, Nakamura-ku Nagoya-shi Aichi-ken (JP); Miki, Toshio Nagoya Techn. Institute Mitsubishi, Nakamura-ku Nagoya-shi Aichi-ken (JP); Mouri, Ryoji Nagoya Techn. Institute Mishubishi, Nakamura-ku Nagoya-shi Aichi-ken (JP)
(74) Representative: Henkel, Feiler, Hänzel & Partner

(56) References cited:
- US-A- 2 721 612
- US-A- 3 478 654
- US-A- 4 210 987
- US-A- 4 747 254
- RD 27451, RESEARCH DISCLOSURE, FEBRUARY 1987, DISCLOSED ANONYMOUSLY "AUTOMATED STRETCH INITIATION CUTTER", PAGE 87

## Description

### BACKGROUND OF THE INVENTION:

### 1. Field of the Invention:

This invention relates to an auto-threading method and apparatus suited to transfer/receive and supply a film to a tentering machine (crosswise stretching) in a biaxial stretching line for a plastic film, etc.

### 2. Description of the Prior Art:

In general, threading of a band-like material such as a film has hitherto been effected manually. This manual threading has to be done during the operation, which leads to a highly dangerous situation. A velocity of manufacturing the films has to be decreased to secure the safety in working. This deteriorates a working efficiency. An additional defect is that two or more workers are required. Immediately after threading the film, it can not be connected but is brought into a split state. In the meantime, a scrap process has to be performed at a stenter outlet. The split scrap films are ununiformly discharged from the stenter outlet while being seized by the clips. Especially when manufacturing thick films, the films formlessly gather. It is required that the gathered films be released from the clips and then treated.

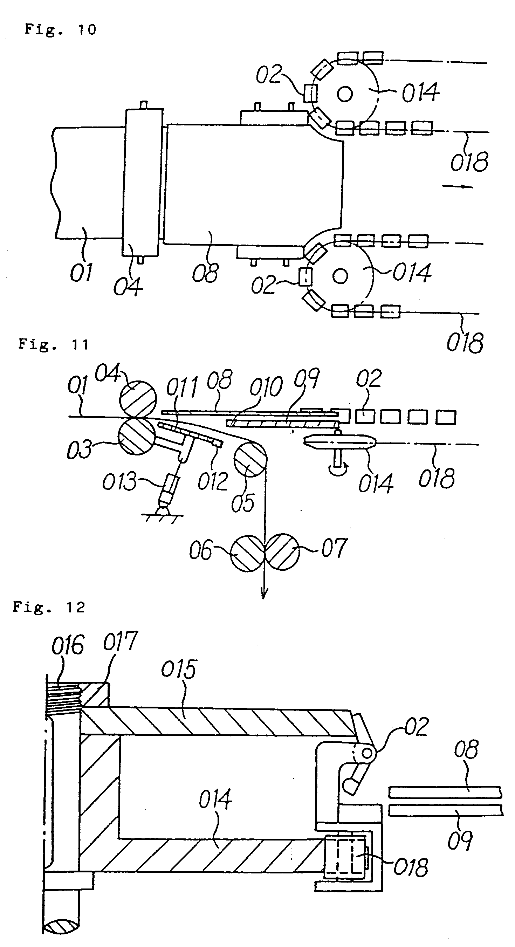

An apparatus disclosed to obviate the conventional defects described above is shown in FIGS. 10 to 12. Referring to these Figures, the numerals 03, 05 represent guide rolls; 04 a nip roll; 06, 07 draw-off rolls for drawing off the film; and 08, 09 guide plates, formed of a material exhibiting a small frictional coefficient, for guiding the film. An upper edge 010 of a cutter is attached to the top end of the guide plate 09 so that the upper face of the upper edge coincides with the upper face of the guide plate 09, or alternatively, the upper edge is singly fixed. The other guide plate 011 formed of the material exhibiting the small frictional coefficient is movable up and down with the aid of an air cylinder 013, wherein an axial core of the guide roll serves as the center. A lower edge 012 of the cutter is adjustably secured to the top end of the other guide plate 011 so that the upper face of the lower edge coincides with the upper face of the other guide plate 011. A sprocket wheel 014 functions to drive a clip chain 018 and clips 02. A disk 015 pushes up blades of the clips to bite the film. The numeral 016 denotes a shaft; and 017 a nut.

It is assumed that the film 01 is carried via the guide rolls 03, 05 up to the draw-off rolls 06, 07 some means, e.g., a carrier rope, wherein the film is drawn off. The air cylinder 013 is operated to move upwords the other guide plate 011. The film is cut off by the cutter 012 fitted to the top end of the guide plate 011 in cooperation with the cutter of the guide plate 09. The film is held in such a position that the upper face of the other guide plate 011 coincides with the upper face of the guide plate 09, or the other guide plate 011 is positioned slightly higher than the plate 09.

Next, the film 01 fed by the guide roll 03 and the nip roll 04 passes between the guide plates 08, 09. The film 01 reaches the clips 02 and is caught by these clips, then starts the normal operation. Thereafter, the air cylinder 013 reverts to its original position preparatory to film threading.

In the prior art apparatus depicted in FIGS. 10 to 12, the film 01 passes between the guide plates 08, 09 with the help of the guide roll 03 and the nip roll 04, and both edges of top end of the film are caught by the clips 02. However, when the soft or incompletely smooth film passes between the guide plates 08, 09, the top end thereof remains free. Hence, if the film is pushed from backwards the film is bent, or creases are formed. It is therefore difficult for the clips to properly uniformly catch the film.

A prior art process and apparatus based on said principle is for instance known from US-A-4 210 987.

### SUMMARY OF THE INVENTION:

It is a primary object of the present invention to provide an auto-threading method and apparatus capable of obviating the foregoing problems inherent in the prior arts.

To this end, according to one aspect of the invention, there is provided an auto-threading method in a film processing line where a transferring/receiving mechanism is equipped with a temporary take-up unit, comprising the steps of: moving two pairs of cutters by twos in crosswise directions of a film, the cutters being movable in the crosswise directions of the film and also movable perpendicularly to a film surface, thereby cutting narrow portions of the film on both sides; obliquely cutting away the narrow portions of the film by one pair of cutters; causing clips carried by chains to catch both ends of the film by handling the oblique film ends; dividing the films into three parts in a longitudinal direction by the other pair of cutters; cutting away both ends of the 3-divided film by using rotary cutters; cutting away the left central part of the film by shifting the other pair of cutters which effect the 3-divisions toward the center; and causing the film to be transferred to and received by the chain clips.

Based on the auto-threading method, a film pass to wind the film fed out from the previous process on the temporary take-up unit is changed over to a film pass to cause the winding rolls to approach tenter clips by swinging the take-up rolls after finishing winding of the film on the temporary take-up unit.

An oblique cut angle of the film is set at 4° - 15°.

According to another aspect of the invention, there is provided an auto-threading apparatus in a film processing line where a transferring/receiving mechanism is equipped with a temporary take-up unit, comprising: two pairs of cutters movable by twos in crosswise directions of a film and directions perpendicular to a film surface, the cutters having cutting edges freely rotatable in a film cutting direction; chain clips for catching both ends of the film by handling the oblique film ends when being cut off by one pair of cutters of the two pairs of cutters; rotary cutters for cutting away both ends of the film divided by the other pair of cutters; and a control unit for controlling respective operations of the cutters, the chain clips and the rotary cutters.

The auto-threading apparatus further includes take-up roll or rolls provided in a space between the temporary take-up unit and the guide rolls on the downstream side of the other pair of cutters, the winding rolls being swingable to make a film pass changeable.

In the auto-threading apparatus, film guide plates are provided in a film transferring/receiving mechanism for the chain clips for catching the film ends.

The control unit includes an arithmetic unit for determining a timing at which the chain clips shift toward the film on the basis of a feeding velocity of the film and film pass data.

The apparatus further includes winding rolls for feeding the film while giving tensions to the edges of the film in directions orthogonal to the feeding direction of the film.

In accordance with the auto-threading method and apparatus of this invention, the film can surely automatically be transferred to and received by the chain clips without requiring manual operations in safety. If the film fails to be transferred to and received from the clips, the transferring/receiving step can resume automatically without stopping a flow of the film.

In advance of starting auto-threading by which the clips are able to catch the film, the film is consecutively threaded from a longitudinal stretching device to a scrap take-up unit through threading chains. This arrangement facilitates the threading operation.

The oblique cut angle is set at 4° - 15°, whereby the film can be caught by the clips more surely. As a result, threading can be smoothly performed.

The guide plates are provided, thereby attaining smooth threading of the obliquely cut films. The operation timing of the chain clips is determined based on the film feeding speed and the film pass data. This arrangement eliminates the necessity for intricate sensors. The take-up roll or rolls feed out the film while giving the tension to the film edges in the directions orthogonal to the film feeding direction. In consequence, the film can be carried with no slack, thereby threading the film more surely.

### BRIEF DESCRIPTION OF THE DRAWINGS:

Other objects and advantages of the present invention will become apparent during the following discussion taken in conjunction with the accompanying drawings, in which:
FIG. 1 is a perspective view showing one embodiment of an auto-threading apparatus of this invention;
FIG. 2 is a view depicting a control system in this apparatus of FIG. 1;
FIGS. 3(a) through 3(f) are exploded diagrams of assistance in explaining the operations of the embodiment of this invention;
FIG. 4 is a plan view showing in detail a cutter shown in FIG. 1;
FIG. 5 is a side elevation showing the same cutter;
FIG. 6 is a side elevation showing a different embodiment of the auto-threading apparatus of the invention, which is different from that of FIG. 1;
FIG. 7 is a time chart showing the operations;
FIG. 8 is a sectional view of a structure of a winding roll, showing the embodiment of this invention;
FIG. 9 is a view taken in an arrowed direction A of FIG. 8;
FIG. 10 is a plan view illustrating a prior art auto-threading apparatus;
FIG. 11 is a sectional view thereof; and
FIG. 12 is a sectional view illustrating in detail a chain clip employed in the auto-threading apparatus.

### DETAILED DESCRIPTION OF THE PREFERRED EMBODIMENTS:

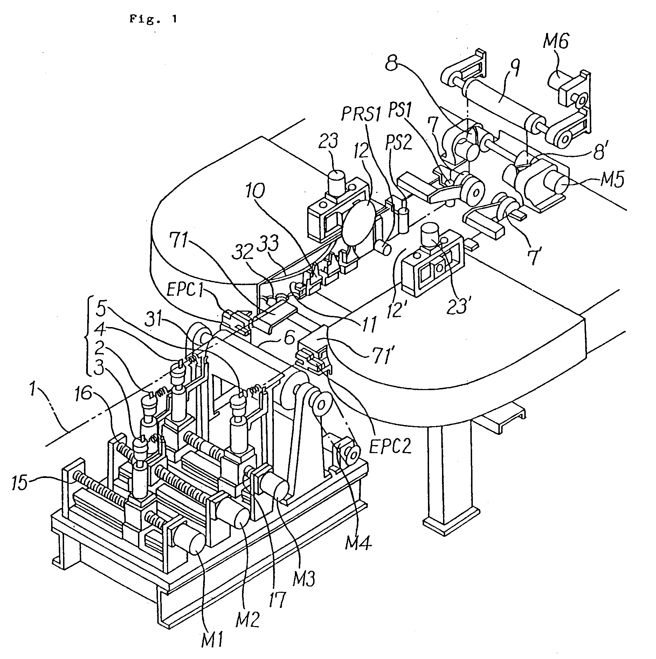

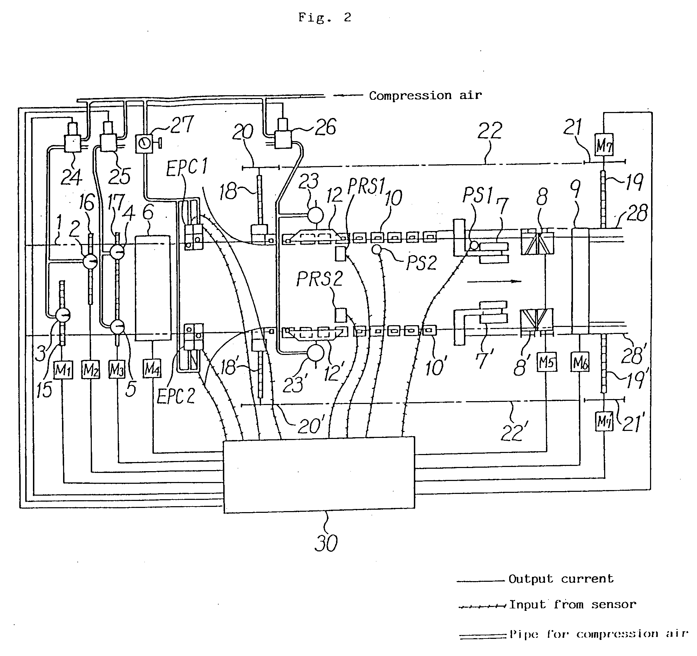

The present invention will hereinafter be described by way of embodiments with reference to the accompanying drawings. FIGS. 1 through 9 show illustrative embodiments of this invention. The following is a description of an embodiment of this invention, showing a film transferring/receiving mechanism. The film is shifted from a longitudinal stretching device of a plastic film biaxial stretching line to a crosswise stretching device thereof.

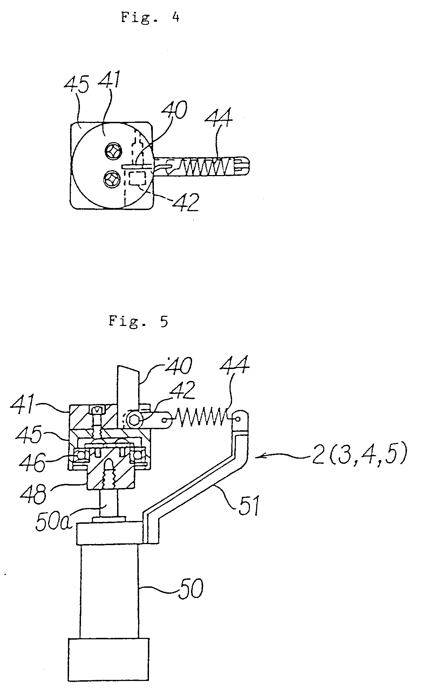

Referring first to FIG. 1, a flow of a film 1 is indicated by a 2-dotted line. Film longitudinal cutters 2 to 5 are disposed at an inlet of the film 1 fed from the longitudinal stretching device. FIGS. 4 and 5 illustrate structures of these cutters 2 - 5. Ball bearings 48 are incorporated in a shaft 48 attached to an operation rod 50a of a pneumatic cylinder 50. Fitted to an outer ring of the ball bearings 46 is a base 45 mounted with a cutter board 41. A cutter knife 40 is mounted to the cutter board 41 with a screw 42. A weak spring 44 works to bias the cutter board 41 in a fixed direction.

Next, the cutters 2 - 5 will be described in greater detail. As illustrated in FIG. 1, these cutters 2 through 5 are movable at variable speeds in directions orthogonal to the feeding direction of the film 1 by means of motors M1, M2 and M3 each equipped with a speed reducer in combination with feed screws 15, 16 and 17. The feed screw 17 has threads chased reversely to each other from its center. When the motor M3 rotates, the cutters 4 and approach a central line of the film or move away therefrom. When raising the cutters 4 and 5 during a shift of the film 1, the film 1 is cut off in the longitudinal direction. The film 1 is cut off obliquely by turning the screw 17 at this moment. Note that the cutter knife is obliquely rotatable along the cutting line at that time, and when the knife gets away from the film 1, however, it returns to the feeding direction of the film 1 by dint of a spring 44.

Next, the film 1 enters a clip unit of the crosswise stretching device via a bridge plate 31 and a feed roll 6. The feed roll 6 is driven by the motor M4 with the speed reducer. Narrow free ends of the film, which have been cut away by the cutters 4 and 5, are bent downwards by the feed roll 6 and become scraps.

Provided in the inlet of the crosswise stretching device depicted in FIG. 1 are guide plates 71, 71′ for guiding both ends of the film. With this arrangement, both ends of the film obliquely cut off by the cutters 4 and 5 are for sure seized by chain clips 10, 10′. One ends of the guide plates 71, 71′ are bent downwards. The chain clips 10, 10′ are combined with a chain link 11 to constitute a chain.

Designated at 32 is a chain sprocket supported on a board. This board and rails 28, 28′ of the chain clips 10, 10′ are movable independently in right-and-left directions orthogonal to the feeding direction of the film. These motions thereof are attained by the motors M7, M7′ with the speed reducer with aid of feed screws 18, 18′, 19, 19′ chains 22, 22′ and sprockets 20, 20′, 21, 21′. Film end detectors EPC1, EPC2, guide plates 71, 71′, clip closers 12, 12′ and clip confirming switches PRS1, PRS2 simultaneously shift mounted on the same frame' as that of sprockets 32, 32′ and rails 28, 28′. Pneumatic cylinders 23, 23′ work to move the closers 12, 12′ up and down. When the closers 12, 12′ are lowered, the chain clips 10, 10′ are set in clip positions. The numeral 33 denotes an uncloser (opener).

Take-up rolls 7, 7′ are bilaterally provided to facilitates threading of the film 1. The take-up rolls 7, 7′ also support the middle of the film 1 to avoid interference with the clips. Rotary cutters 8, 8′ cut only both ends of the film 1. The cutters 8, 8′ have such a structure as to cut the film 1 by rubbing cutter members of two cutter rolls each other. Gears are secured to cutter shafts and mesh with each other, whereby the cutters 8, 8′ make reverse rotations to each other. The rotary cutters 8, 8′ are driven by the motor M5 with the speed reducer. Scrap take-up unit 9 is provided on the down-stream side of the rotary cutter and is driven by the motor M6 with the speed reducer. The scrap take-up unit 9 temporarily winds up the film 1 as a prestep of film threading. This take-up unit 9 transfers the film 1 to the chain clips 10, 10′ while feeding the film 1.

The symbol PS1 represents an end cut confirming photoelectric switch; and PS2 a photoelectric switch for confirming the obliquely cut portion of the end of the film 1. The switch PS2 permits a start of the closer operation. Installed on the fixing side of the crosswise stretching device are the take-up rolls 7, 7′, the rotary cutters 8, 8′, the scrap take-up unit 9 and photoelectric switches PS1, PS2. Electromagnetic valves for compression air 24 and 25 act to change over the compression air for raising and lowering the cutters 2 through 5. An electromagnetic valve for compression air 26 works to change over the compression air fed to the pneumatic cylinders 23, 23′ for operating the clip closers 12, 12′. A pneumatic adjusting valve 27 adjusts a pressure of low pressure air fed to the film end detectors EPC1, EPC2. A control panel 30 calculates respective operation timings of the detectors EPC1, EPC2 and the chain clips 10, 10′. This calculation is effected upon receiving signals from individual sensors or based on a film speed at this time and a previously inputted film pass, i.e., positional data of the film end detectors EPC1, EPC2 and chain clips 10, 10′. The control panel 30 permits the motors and electromagnetic valves to perform their operations needed by supplying them with electric currents.

Next, the operation will be explained. The film fed from the longitudinal stretching unit runs above the cutters 2, 3, 4 and 5 (all of them remain lowered). The film 1 passes between the chain clips 10, 10′ (the clips remain expanded) via the feed roll 6 and the guide plates 71, 71′. The film 1 is bent upwards from the underside of the take-up rolls 7, 7′. The film 1 runs between the rotary cutters 8, 8′ and is wound on the scrap take-up unit 9. Transferring/receiving to the chain clips 10, 10′ starts from this state where the film 1 is being smoothly normally fed.

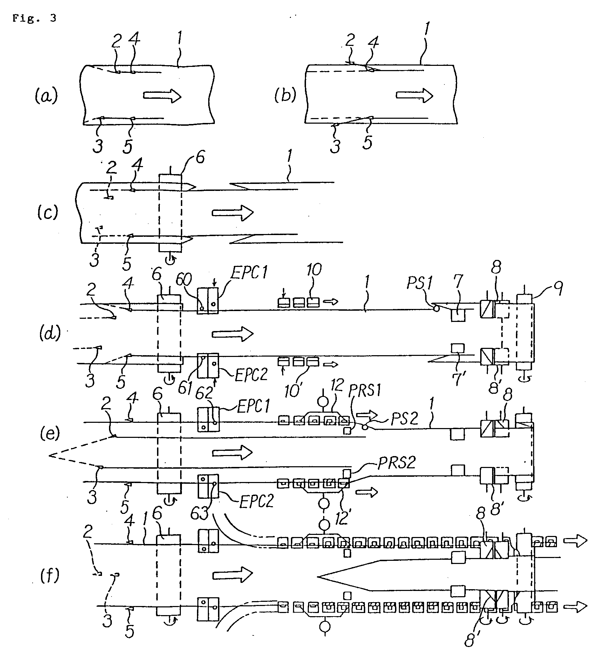

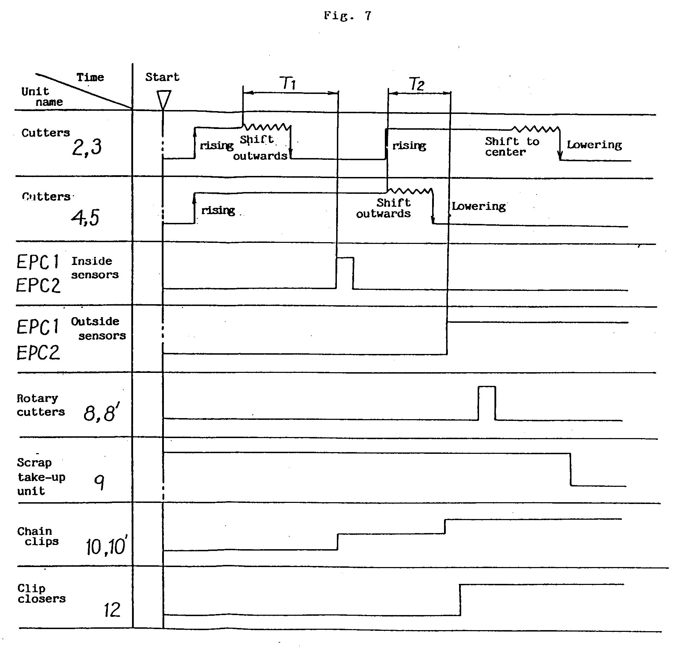

FIGS. 3(a) to 3(f) show relationships between a flow of the film 1 and operations of the cutters 2 through 5, the sensors, the rotary cutters 8, 8′, the clip closers 12, 12′ and the clip chains 10, 10′. Points of the respective steps will be explained referring to FIGS. 3(a) through 3(f). FIG. 7 is an operating time chart.
(a) The cutters 2 to 5 move slightly away from both ends of the film 1 and rise by twos in parallel in the film carrying direction, in which positions the cutters start cutting the film 1.
(b) When longitudinal cutting process a little bit advances, the cutters 2 and 3 move outwards to obliquely cut off the narrow side portions of the film. The cutters 4 and 5 remain in the same positions and therefore cut out the narrow films having the free ends.
(c) The narrow films on both sides are ejected downwards (discharged by vacuum-pulling, if necessary) by the feed roll 6.
(d) The photoelectric switch EPC1 detects the cut-away position of the film and transmits its signal to the control panel 30, alternatively, there has passed a time (T₁) till the cut-away position of the film reached to positions of inside sensors 60, 61 of the film end detectors EPC1, EPC2, then the inside sensors 60, 61 of the detectors EPC1, EPC2 are operated based on an instruction given within from the control panel. The film end detectors EPC1, EPC2 and the chain clips 10, 10′ approach the film 1 and stop at sensing positions of the inside sensors. The inside sensors stops functioning at this moment. The chain clips 10, 10′ travel at the same velocity in the same direction as those of the film 1. The cutters 4, 5 move outwards in response to the signal of the photoelectric switch PS1. The cutters 4, 5 start obliquely cutting away the narrow films. The cuttings 2, 3 rise at an inside position of the cutters 4, 5 and start dividing longitudinally the film 1 into three parts.
   An oblique cut angle shown in FIG. 3 is set to an optimum angle to permit the chain clips to catch the film 1. The oblique cut angle is set by controlling a rotational speed of the motor M3 for moving the cutters 4, 5 in accordance with the film velocity. According to the experimental data, an optimum angle is given between 4° and 15°.
(e) The photoelectric switch PS2 detects an oblique cut-away position of the film 1, alternatively there has passed a time till the cut-away position of the film reached to positions of outside sensors 62, 63 of the film end detectors EPC1, EPC2, then, the outside sensors 62, 63 of the detectors EPC1, EPC2 operate in response to the signal thereof. Simultaneously, the chain clips 10, 10′ further approach the film 1 and stop in the film seizing positions. Subsequently, the clip closers 12, 12′ are lowered, while the chain clips 10, 10′ start catching the film 1.
(f) Upon detecting that the film 1 has surely been caught by the chain clips 10, 10′ through the clip confirming switches PRS1, PRS2, or when the operation shown in (e) comes to an end, the rotary cutters 8, 8′ continue to rotate during a given period in response to the signal thereof. Both ends of the 3-divided film 1 are cut away. Concurrently, the cutters 2, 3 move close to the central line of the film 1 and work to cut away the middle part of the 3-divided film 1. The cutters 2, 3 (4, 5) are lowered. The film 1 is thereby separated completely from the scrap take-up unit 9. The whole width thereof is pulled into the crosswise stretching device by the chain clips 10, 10′. Subsequent to this step, the scrap take-up unit 9 is stopped, thus finishing transferring/receiving of the film.

Note that in the operation (f), if the chain clips 10, 10′ fail to catch the film 1, and if both or either the clip confirming switch PRS1 or PRS2 emits no clip confirming signal, a timer works simultaneously when the photoelectric switch PS2 transmits the signal. If both of the switches PRS1 and PRS2 emit no signal within a constant period, the timer is turned off. The closers 12, 12′ ascend, and the chain clips 10, 10′ cease to catch the film. The film end detectors EPC1, EPC2 and the chain clips 10, 10′ shift outwards away from the film 1. The rotary cutters 8, 8′, which originally function in response to the signals of the switches PRS1, PRS2, do not work at all. The inward shifts of the cutters 2, 3 do not take place. Then, the cutters 2 through 5 return to the positions depicted in FIG. 3(a), and the operation move again to the automatic transferring/receiving steps. If the film fails to be transferred or received during the previous operation, this film is wound directly on the scrap take-up unit 9. The film continues to be fed.

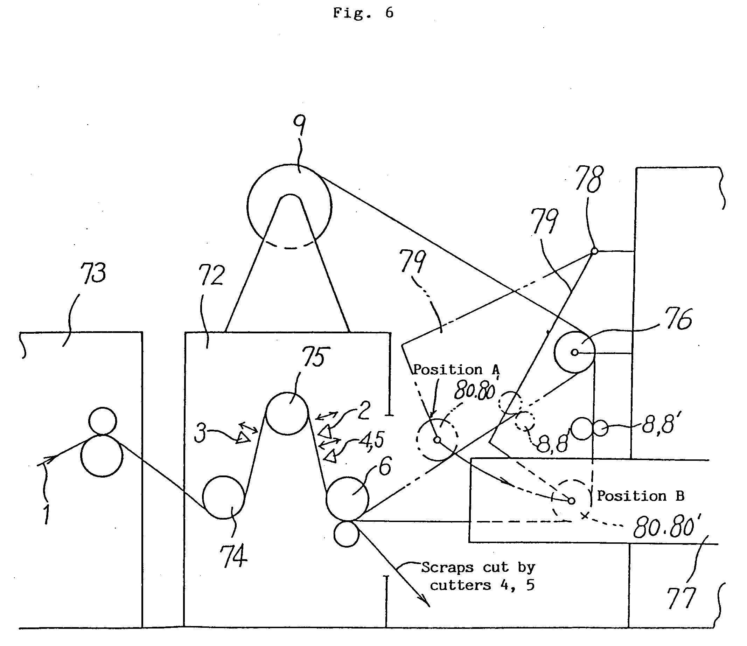

FIG. 6 shows an embodiment of the present invention, which aims at threading the film to the scrap take-up unit 9 of the transferring/receiving mechanism as well as permitting the clips 10, 10′ to catch the film after undergoing the threading process. The scrap take-up unit 9 is provided on an upper portion of a cutter unit 72. The take-up unit 9 is driven, as in the way shown in FIG. 1, by a motor equipped with a speed reducer. There is provided an unillustrated threading chain for threading the film or a carrier rope of the longitudinal stretching device 73. The threading chain or carrier rope is continuously led to the scrap take-up unit 9 from rolls 74, 75 and a roll 6 of the cutter unit 72 having a structures different from that of FIG. 1 via a guide roll 76 secured to the crosswise stretching device. The film 1 fed from the longitudinal stretching device 73 is threaded to and wound on the scrap take-up unit 9 by the threading chain or carrier rope through the rolls 74, 75, the roll 6 and the guide roll 76.

Based on the structure of the cutter unit 72, the bridge plate 31 provided on this side of the feed roll of FIG. 1 is unnecessary. The cutters 2 through 5 are, as in the same way with FIG. 1, attached to the feed screws 15 through 17 which rotatably axially supported on the side plate of the cutter unit 72. The cutters 2 through 5 are advanceable and retreatable in the direction perpendicular to the surface of the film 1. The take-up rolls 7, 7′ illustrated in FIG. 1 are fixed to a tenter frame 77. In FIG. 6, however, take-up rolls 80, 80′ are fitted to an arm 79 swingable about a fulcrum 78 secured to the crosswise stretching device. The rolls 80, 80′ are swingable between positions A and B with the aid of an unillustrated air cylinder. The roll cutters 8, 8′ are rotatably axially supported on the arm 79 through an unillustrated bracket. The take-up rolls 80, 80′ are raised up to the position A when threading the film 1 to the scrap take-up unit 9. Threading of the film 1 is thereby facilitated. The film 1 is wound on the scrap take-up unit 9. Thereafter, the take-up rolls 80, 80′ are moved from the position A to the position B by an unillustrated air cylinder, whereby the film 1 can be caught by the clips 10, 10′. After finishing this operation, there start the auto-threading operations (a) through (f) of the crosswise stretching device of FIG. 3. Note that the scrap take-up unit 9 can be set in the position illustrated in FIG. 1. The roll cutters 8, 8′ are replaceable with opening/closing type cutters.

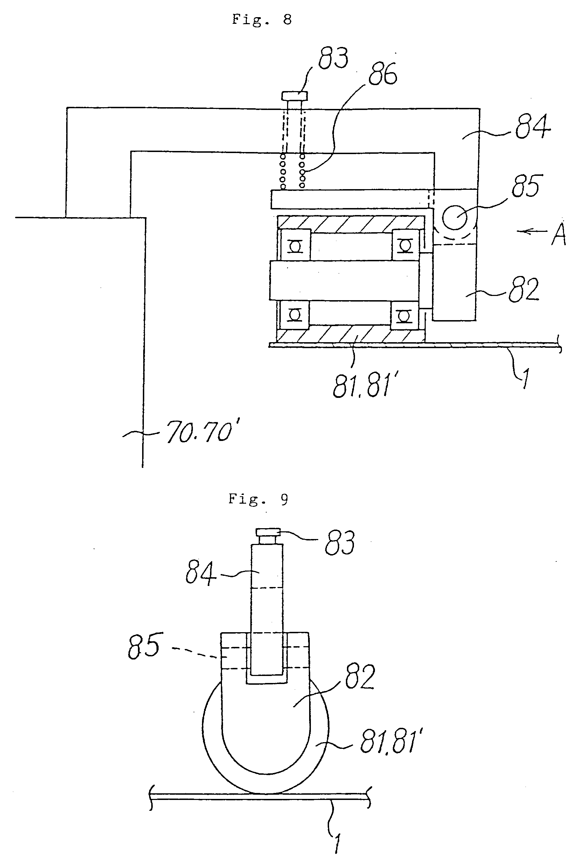

Note that rolls 81, 81′ of FIGS. 8 and 9 can be adopted in place of the take-up rolls 7, 7′ of FIG. 1. The rolls 81, 81′ are rotatably supported on an L-shaped bracket 82 provided with a bar 83. A support body 84 is fixed to a frame 70′. The support body 84 rotatably support the L-shaped bracket 82 with a pin 85. The support body 84 is constantly biased downwards by a compression spring 86. Hence, the take-up rolls 81, 81′ give tension to edges of the film 1 in directions orthogonal to the feeding direction thereof.

Although the illustrative embodiment of this invention has been described in detail with reference to the accompanying drawings, it is to be understood that the present invention is not limited this embodiment.

## Claims

1. An auto-threading method in a film processing line where a transferring/receiving mechanism is equipped with a temporary take-up unit (9), comprising the steps of:
moving two pairs of cutters (2-5) by twos in crosswise directions of a film (1), said cutters (2-5) being movable in the crosswise directions of said film (1) and also movable perpendicularly to a film surface, thereby cutting narrow portions of said film on both sides;
obliquely cutting away the narrow portions of said film (1) by said one pair (4, 5) of cutters;
causing clips (10, 10') carried by chains to catch both ends of said film (1) by handling the oblique film ends;
dividing said films into three parts in a longitudinal direction by said other pair (2, 3) of cutters;
cutting away both ends of said 3-divided film by using rotary cutters (8, 8');
cutting away the left central part of said film (1) by shifting said other pair (2, 3) of cutters which effect the 3-divisions toward the center; and
causing said film (1) to be transferred to and received by said chain clips (10, 10').

2. The method as set forth in claim 1, wherein a film pass to wind said film fed out from the previous process on said temporary take-up unit (9) is changed over to a film pass to cause take-up roll or rolls (7, 7') to approach tenter clips by swinging said take-up roll or rolls after finishing winding of said film (1) on said temporary take-up unit (9).

3. The method as set forth in claims 1 and 2, wherein an oblique cut angle of said film (1) is set at 4° - 15°.

4. An auto-threading apparatus in a film processing line where a transferring/receiving mechanism is equipped with a temporary take-up unit (9), comprising:
two pairs of cutters (2-5) movable by twos in crosswise directions of a film (1) and directions perpendicular to a film surface, said cutters (2-5) having cutting edges freely rotatable in a film cutting direction;
chain clips (10, 10') for catching both ends of said film (1) by handling the film ends inclined when being cut off by said one pair (4, 5) of cutters of said two pairs of cutters;
rotary cutters (8, 8') for cutting away both ends of said film (1) divided by said other pair (2, 3) of cutters; and
a control unit (30) for controlling respective operations of said cutters (2-5), said chain clips (10, 10') and said rotary cutters (8, 8').

5. The apparatus as set forth in claim 4, further comprising take-up rolls (7, 7') provided in a space between said temporary take-up unit (9) and a guide roll (6) on the downstream side of said other pair (2, 3) of cutters, said take-up rolls (7, 7') being swingable to make a film pass changeable.

6. The apparatus as set forth in claims 4 and 5, wherein film guide plates (71, 71') are provided in the film transferring/receiving mechanism for said chain clips for catching the film ends.

7. The apparatus as set forth in claims 4 to 6, wherein said control unit (30) includes an arithmetic unit for determining a timing at which said chain clips (10, 10') shift toward said film (1) on the basis of a feeding velocity of said film and film pass data.

8. The apparatus as set forth in claims 4 to 7, further comprising winding rolls (81, 81') for feeding said film (1) while giving tensions to the edges of said film in directions orthogonal to the feeding direction of said film (1).

## Patentansprüche

1. Selbsteinziehverfahren in einer Folienverarbeitungsstraße oder -linie, worin ein Überführungs/Aufnahmemechanismus mit einer Zwischenaufwickeleinheit (9) ausgestattet ist, umfassend die folgenden Schritte:
paarweises Bewegen von zwei Paaren von Schneideinheiten bzw. Messern (2 - 5) in Querrichtungen einer Folie (1), wobei die Messer (2 - 5) in den Querrichtungen der Folie (1) und auch senkrecht zu einer Folienoberfläche bewegbar sind, um damit schmale Abschnitte der Folie auf beiden Seiten (derselben) zu schneiden,
schräges Ab- oder Wegschneiden der schmalen Abschnitte der Folie (1) mittels des einen Paars (4, 5) der Messer,
Erfassen der beiden Enden der Folie (1) mittels von Ketten getragener Klammern (10, 10') durch Handhabung der schrägen Folienenden,
Unterteilen der Folien in drei Teile in einer Längsrichtung mittels des anderen Paars (2, 3) der Messer,
Ab- oder Wegschneiden beider Enden der dreigeteilten Folie mit Hilfe von Drehmessern (8, 8'),
Ab- oder Wegschneiden des linken Mittelteils der Folie (1) durch Verschieben des anderen Paars (2, 3) der Messer, welche die Dreiteilung bewirken, zur Mitte hin und
Überführen der Folie (1) zu den Kettenklammern (10, 10') und Aufnehmen derselben durch letztere.

2. Verfahren nach Anspruch 1, wobei eine Folien(durchlauf)strecke zum Wickeln der aus dem vorangehenden prozeß zugeführten Folie an der Zwischenaufwickeleinheit (9) auf eine Folienstrecke, um (eine) Aufwickelwalze(n) (7, 7') sich an Spannklammern annähern zu lassen, geändert oder umgeschaltet wird, indem die Aufwickelwalze(n) nach Abschluß des Wickelns der Folie (1) an der Zwischenaufwickeleinheit 89) verschwenkt wird (werden).

3. Verfahren nach Anspruch 1 und 2, wobei ein Schrägschnittwinkel der Folie (1) auf 4 - 15° eingestellt ist bzw. wird.

4. Selbsteinziehvorrichtung in einer Folienverarbeitungsstraße oder -linie, worin ein Überführungs/Aufnahmemechanismus mit einer Zwischenaufwickeleinheit (9) ausgestattet ist, umfassend:
zwei Paare von Schneideinheiten oder Messern (2 - 5), die paarweise (by twos) in Querrichtungen einer Folie (1) und Richtungen senkrecht zu einer Folienoberfläche bewegbar sind, wobei die Messer (2 - 5) in einer Folienschneiderichtung frei drehbare Schneidkanten aufweisen,
Kettenklammern (10, 10') zum Fangen bzw. Erfassen beider Enden der Folie (1) durch Handhabung der Folienenden, die geschrägt sind, wenn sie durch das eine Paar (4, 5) der Messer der beiden Messerpaare (ab)geschnitten (worden) sind,
Drehmesser (8, 8') zum Ab- oder Wegschneiden der beiden Enden der Folie (1), durch das andere Paar (2, 3) der Messer unterteilt, und
eine Steuereinheit (30) zum Steuern jeweiliger Operationen der Messer (2 - 5), der Kettenklammern (10, 10') und der Drehmesser (8, 8').

5. Vorrichtung nach Anspruch 4, ferner umfassend Aufwickelwalzen (7, 7'), die in einem Raum zwischen der Zwischenaufwickeleinheit (9) und einer Leitwalze (6) an der Stromabseite des anderen Paars (2, 3) der Messer vorgesehen und schwenkbar sind, um eine Folien(durchlauf)strecke änderbar zu machen.

6. Vorrichtung nach Anspruch 4 und 5, wobei im Folienüberführungs/aufnahmemechanismus Folienleitplatten (71, 71') für die Kettenklammern zum Erfassen der Folienenden vorgesehen sind.

7. Vorrichtung nach Ansprüchen 4 bis 6, wobei die Steuereinheit (30) eine Recheneinheit zum Bestimmen eines Zeitpunkts (Takts), zu dem sich die Kettenklammern (10, 10') zur Folie (1) hin verschieben, auf der Grundlage einer Transportgeschwindigkeit der Folie und von Foliendurchlaufdaten aufweist.

8. Vorrichtung nach Ansprüch 4 bis 7, ferner umfassend Wickelwalzen (81, 81') zum Transportieren der Folie (1) unter Ausübung von Zugspannungen an den Rändern der Folie in Richtungen senkrecht zur Transportrichtung der Folie (1).

## Revendications

1. Procédé pour enfiler automatiquement un film dans une ligne de traitement où un mécanisme de transfert / réception est équipé d'une unité de maintien temporaire (9), comprenant les étapes consistant à :
- déplacer deux paires d'éléments de coupe (2-5) par deux dans des directions transversales d'un film (1), lesdits éléments de coupe (2-5) étant mobiles dans les directions transversales dudit film (1) et également mobiles perpendiculairement à une surface de film, pour couper ainsi des parties étroites dudit film sur les deux côtés ;
- sectionner en oblique les parties étroites dudit film (1) par ladite paire d'éléments de coupe (4, 5);
- faire en sorte que des pinces (10, 10') portées par des chaines retiennent les deux extrémités dudit film (1) par manipulation des extrémités de film coupées en oblique ;
- diviser lesdits films en trois parties dans une direction longitudinale par ladite autre paire d'éléments de coupe (2, 3);
- sectionner les deux extrémités dudit film divisé en trois en utilisant des éléments de coupe rotatifs (8, 8');
- sectionner la partie centrale de gauche dudit film (1) par décalage de ladite autre paire d'éléments de coupe (2, 3) qui effectue les divisions par trois en direction du centre ; et
- faire en sorte que ledit film (1) soit transféré jusqu'aux pinces (10, 10') de ladite chaine et soit reçu par elles.

2. Procédé tel que revendique dans la revendication 1, dans lequel une passe de film pour enrouler ledit film provenant de l'opération précédente sur ladite unité de maintien temporaire (9) est changée en une passe de film faisant en sorte qu'un ou des rouleaux de maintien (7, 7') se rapprochent des pinces par pivotement du ou desdits rouleaux de maintien après terminaison de l'enroulement dudit film (1) sur ladite unité de maintien temporaire (9).

3. Procédé tel que revendiqué dans les revendications 1 et 2, dans lequel un angle de coupe en oblique dudit film (1) est règlé entre 4° et 15°.

4. Appareil d'enfilement automatique de film dans une ligne de traitement où un mécanisme de transfert/réception est équipé d'une unité de maintien temporaire (9) comprenant :
- deux paires d'éléments de coupe (2 - 5) mobile par deux dans des directions transversales d'un film (1) et dans des directions perpendiculaires à une surface de film, lesdits éléments de coupe (2 - 5) comportant des bords de coupe pouvant tourner librement dans une direction de coupe de film;
- des pinces (10, 10') associées à une chaine pour saisir les deux extrémités dudit film (1) par manipulation des extrémités de film inclinées lors de la coupe par ladite première paire d'éléments de coupe (4, 5) faisant partie des deux paires précitées d'éléments de coupe ;
- des éléments de coupe rotatifs (8, 8') pour sectionner les deux extrémités dudit film (1) divisé par ladite autre paire d'éléments de coupe (2, 3); et
- une unité de commande (30) pour commander des opérations respectives desdits éléments de coupe (2 - 5), desdites pinces (10, 10') associées à une chaine et desdits éléments de coupe rotatifs (8, 8').

5. Appareil tel que revendiqué dans la revendication 4, comprenant en outre des rouleaux de maintien (7, 7') disposés dans un espace entre ladite unité de maintien temporaire (9) et un rouleau de guidage (6) sur le côté d'aval de ladite autre paire d'éléments de coupe (2, 3) lesdits rouleaux de maintien (7, 7') pouvant pivoter de façon à créer une passe de film changeable.

6. Appareil tel que revendiqué dans les revendications 4 et 5, dans lequel des plaques de guidage de film (71, 71') sont disposées dans le mécanisme de transfert/réception de film pour lesdites pinces à chaine servant à saisir les extrémités de film.

7. Appareil tel que revendiqué dans les revendications 4 et 6, dans lequel ladite unité de commande (30) comprend une unité arithmétique pour déterminer une synchronisation selon laquelle lesdites pinces à chaine (10, 10') se déplacent vers le film (1) sur la base de la vitesse d'avancement du film et de données concernant les passes du film.

8. Appareil tel que revendiqué dans les revendications 4 à 7, comprenant en outre des rouleaux d'enroulement (81, 81') pour l'entraînement du film tout en produisant des tensions sur les bords dudit film dans des directions orthogonales à la direction d'avancement du film.
